(19) Europäisches Patentamt

European Patent Office

Office européen des brevets

(11) **EP 1 004 348 A2**

(12) **EUROPÄISCHE PATENTANMELDUNG**

(43) Veröffentlichungstag:
**31.05.2000 Patentblatt 2000/22**

(51) Int. Cl.[7]: **B01D 61/44**, C02F 1/46

(21) Anmeldenummer: **99120130.2**

(22) Anmeldetag: **08.10.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **29.10.1998 DE 19849924**

(71) Anmelder:
**Degussa-Hüls Aktiengesellschaft
60287 Frankfurt am Main (DE)**

(72) Erfinder:
• **Wiese, Klaus-Diether, Dr.
45721 Haltern (DE)**
• **Jakob, Antje, Dr.
27283 Verden (DE)**
• **Kuppinger, Franz-Felix, Dr.
45768 Marl (DE)**

(54) **Verfahren zur Abtrennung organischer Säuren aus wässrigen Lösungen**

(57)  Bei den herkömmlichen Verfahren zur Behandlung von organische Säuren enthaltenden Prozeßwässern aus z. B. Aldolisierungen wurden immer nur basische Bestandteile abgetrennt, während die organische Säure in der wäßrigen Lösung zurückblieb. Die Entsorgung oder Weiterbehandlung dieser Lösung war technisch nur schwierig möglich und verlangte einen großen finanziellen Aufwand.

Die vorliegende Erfindung betrifft deshalb ein Verfahren zur Abtrennung organischer Säuren aus wäßrigen Lösungen durch die Anwendung elektrochemischer Verfahren. Das erfindungsgemäße Verfahren wird unter anderem zur Reinigung von bei Aldolisierungsprozessen anfallenden Reaktionswassern genutzt.

Fig. 1

**Beschreibung**

Die vorliegende Erfindung betrifft ein Verfahren zur Abtrennung organischer Säuren aus wäßrigen Lösungen.

Insbesondere betrifft die Erfindung ein Verfahren zur Reinigung des Prozeßwassers bei Aldolisierungsreaktionen.

Bei vielen basisch katalysierten Kondensationsreaktionen von organischen Verbindungen. insbesondere bei der Umsetzung von Aldehyden, entstehen als Nebenprodukt Carbonsäuren, die einen Teil des Katalysators neutralisieren. Ein Prozeß von großer technischer Bedeutung ist beispielsweise die Kondensation von n-Butyraldehyd zu 2-Ethylhex-2-enal und Wasser. Dabei wird das Reaktionsgemisch üblicherweise wie folgt aufgearbeitet: Im ersten Schritt wird in einem Absitzbehälter die das Produkt enthaltende organische Phase von der wäßrigen Phase (Katalysatorlösung und Reaktionswasser) getrennt. Aufgrund der Polarität der in den Nebenreaktionen entstehenden organischen Säuren sowie der als Katalysator eingesetzten Base finden sich diese beiden Komponenten hauptsächlich in der wäßrigen Phase. Eine direkte Zuführung dieser wäßrigen Phase zur Kläranlage ist daher auf Grund der hohen Belastung mit Basen und organischen Bestandteilen meist nicht wünschenswert. Zudem muß, bedingt durch das Ausschleusen der Base mit der wäßrigen Phase aus dem Prozeß, zur Gewährleistung einer konstanten Katalysatorenkonzentration standig frische Base dem Prozeß zugeführt werden, was kostenintensiv ist und dem eigentlichen Begriff Katalysator widerspricht.

Aus WO 92/07648 ist ein Verfahren zur Rückgewinnung von Natronlauge aus Prozeßwassern der oben genannten Art bekannt. Bei diesem Verfahren, welches die Aufbereitung der bei der Aldolkondensationen anfallenden wäßrigen Phasen zur Aufgabe hat, werden Kationenaustauschermembranen eingesetzt. Die wäßrige Phase enthält bei diesem Verfahren neben dem basischen Katalysator auch die Metallsalze der als Nebenprodukte gebildeten organischen Säure bzw. des Alkohols. Diese Lösung wird in einer Zweikammermembranelektrolysezelle durch die Anodenkammer geführt. Bei angelegtem elektrischen Feld wandern die Metallkationen in die Kathodenkammer und reagieren mit den an der Kathode gebildeten Hydroxid-Ionen zum Metallhydroxid. Im Anodenkreislauf bleibt eine wäßrige Lösung zurück, die überwiegend nur die organischen Säuren bzw. den Alkohol enthält. Die Entsorgung dieser Lösung ist aufwendig, da die organischen Bestandteile nur in geringen Konzentrationen vorliegen und die Lösung somit nicht direkt der thermischen Entsorgung zugeführt werden kann. Auch die Rückgewinnung der in geringen Konzentrationen vorliegenden organischen Säuren ist nicht lohnend.

Aus DE 196 04 903 ist ein ähnliches Verfahren zur Abtrennung von Lauge aus dem bei der Aldolkondensation anfallenden Produkt bekannt, welches nach dem Prinzip der Dreikammerelektrolyse bzw. -elektrodialyse arbeitet. Bei diesem Verfahren wird die das Produkt enthaltende Phase, nach Abtrennung einer wäßrigen Phase, durch die mittlere Kammer der Elektrolysezelle geführt, welche durch eine Anionenaustauschermembran und eine Kationenaustauschermembran begrenzt wird. Im elektrischen Feld wandern im Fall von Natronlauge als Katalysator die $Na^+$-Ionen durch die Kationenaustauschermembran und bilden in der Kathodenkammer mit den an der Kathode entstehenden $OH^-$-Ionen Natronlauge. Durch die Anionenaustauschermembran wandern die in der mittleren Kammer enthaltenen $OH^-$-Ionen in die Anodenkammer und reagieren mit den an der Anode entstehenden $H^+$-Ionen zu Wasser. Bei diesem Verfahren zur Abtrennung von Lauge wird die Base aus dem Produkt entfernt, jedoch werden die in der wäßrigen Phase enthaltenen basischen und organischen Bestandteile nicht aufgearbeitet.

Bei beiden oben genannten Verfahren verarmt die zu behandelnde Phase im Laufe der Elektrolyse bzw. Elektrodialyse an gelöstem Metallhydroxid, und die Leitfähigkeit der Lösung nimmt mit Fortschreiten der Elektrolyse bzw. Elektrodialyse ab. Dies hat zur Folge, daß zur Abtrennung von in der zu behandelnden Phase noch vorhandenen Bestandteilen ein immer größer werdender Leistungseintrag notwendig wird.

Eine weitere bekannte Möglichkeit zur Behandlung von organische Bestandteile enthaltenden wäßrigen Lösungen ist das Ansäuern der wäßrigen Lösung, bis sich eine Phasentrennung ergibt. Dabei werden jedoch nur die Hochsieder aus der Lösung entfernt, die organischen Säuren verbleiben weiterhin in der wäßrigen Phase. Zudem erfolgt eine weitere Aufsalzung des Stoffstroms der wäßrigen Lösung, die die Entsorgung schwieriger gestaltet.

Der Erfindung liegt daher die Aufgabe zugrunde, ein einfaches Verfahren zur Abtrennung von organischen Säuren aus wäßrigen Lösungen bereitzustellen, daß insbesondere die Aufarbeitung von abgetrennten wäßrigen Phasen aus Aldolisierungsreaktionen erleichtert.

Überraschenderweise wurde gefunden, daß die Abtrennung von organischen Säuren aus wäßrigen Lösungen durch die Anwendung elektrochemischer Verfahren wesentlich vereinfacht wird.

Gegenstand der vorliegenden Erfindung ist daher ein Verfahren zur Abtrennung von organischen Säuren aus wäßrigen Lösungen, daß gekennzeichnet ist durch eine Abtrennung der organischen Säuren mittels elektrochemischer Verfahren aus der zu behandelnden Lösung.

Mit Hilfe des erfindungsgemäßen Verfahrens können unabhängig von ihrer Herkunft alle wäßrigen Lösungen von organischen Säuren behandelt werden, insbesondere jedoch solche, die bei Aldolisierungsreaktionen anfallen.

Bei diesen in bekannter Weise durchgeführten basenkatalysierten Aldolkondensationen entstehen aufgrund des Reakrionsmechanismus je 2 mol eingesetzten Aldehyds bzw. Ketons 1 mol Wasser. Zusätzlich wird die Base als wäßrige Lösung zur Reaktion hinzugegeben. Nach der Reaktion liegen eine organische Phase und eine wäßrige Phase vor. Zur Abtrennung des gewünschten Produkts bedient man sich in der Regel der Phasentrennung mittels Phasenabscheider. Die organische Phase enthält in der Hauptsache das gewünschte Produkt, während die wäßrige Phase den eingesetzten Katalysator sowie organische Bestandteile, die bei Nebenreaktionen der Aldolkondensation häufig anfallen, enthält. Zu nennen ist hier im besonderen die Disproportionierungsreaktion der Aldehyde bzw. Ketone, die auch als Cannizarro-Reaktion bekannt ist. Bei dieser Reaktion entstehen aus zwei Molekülen Aldehyd bzw. Keton ein Molekül Carbonsäure und ein Molekül Alkohol deren Kohlenstoffkettenlänge von der des eingesetzten Aldehyds bzw. Ketons abhängig ist. Die organischen Säuren sind bis zu einer Kettenlänge von 4 bis 5 Kohlenstoffatomen gut wasserlöslich, so daß sie bei der Phasentrennung hauptsächlich in der wäßrigen Phase verbleiben.

Die Trennung der organischen Säuren aus wäßrigen Lösungen wird durch zwei Ausführungsarten des erfindungsgemäßen elektrochemischen Verfahrens, der Elektrolyse und der Elektrodialyse, erreicht. Bei beiden Ausführungsarten wird vorzugsweise dem Stoffstrom vor Durchführung des erfindungsgemäßen elektrochemischen Verfahrens durch allgemein bekannte Verfahren, vorzugsweise durch eine Flash-Verdampfüng, ein Teil des Wassers entzogen. Dieses Wasser ist nahezu frei von anorganischen und organischen Belastungen und kann somit direkt der Weiterverwendung bzw. der Entsorgung zugeführt werden. Es kann aber auch direkt ein Teilstrom der wäßrigen Phase abgezogen und behandelt werden.

Bei der elektrolytischen Ausführungsart wird die Stofftrennung dadurch erreicht, daß die zu behandelnde wäßrige Lösung in die Kathodenkammer eines Elektrolysemoduls eingebracht wird. Diese ist erfindungsgemäß mit zumindest einer handelsüblichen Anionenaustauschermembran wie z. B. der AHA-2 der Firma Tokuyama Soda Ltd. ausgestattet, die die Kathodenkammer von der Anodenkammer trennt.

Die Kathodenkammer ist vorzugsweise in einen Vorlage-Kreislauf eingebunden, in dem die zu behandelnde Lösung vorgelegt wird. Die Anodenkammer, in der organische Säure, vorzugsweise die in der zu behandelnden Lösung schon vorhandene Säure, vorgelegt wird, ist vorzugsweise ebenfalls in einem Kreislauf mit zumindest einer Vorlage verbunden. Die Kathodenkammer wird in gleicher oder entgegengesetzter Richtung, vorzugsweise in gleicher Richtung wie die Anodenkammer, durchströmt. Kathoden- und Anodenkammer können aber auch jeweils ohne Kreislaufführung von der zu behandelnden Lösung bzw. der vorgelegten Säurelösung durchströmt werden.

In der Anodenkammer und der Kathodenkammer befindet sich jeweils mindestens eine Elektrode, nämlich eine Anode bzw. eine Kathode. Die Kathode besteht aus einem für Elektrolysen bekannterweise verwendetem Material, vorzugsweise Stahl. Die Anode besteht erfindungsgemäß vorzugsweise aus Stahl, Platinmohr, Platin, Graphit, Mischoxid oder sie besteht aus einer Kombination dieser Bestandteile. rein oder aufgetragen auf oder eingebracht in ein Trägermaterial, vorzugsweise Titan.

Durch Anlegen einer elektrischen Spannung entsteht ein elektrisches Feld zwischen den Elektroden. Erfindungsgemäß wandern unter Einfluß des Feldes die Kationen, im Fall z. B. der basenkatalysierten Octenalherstellung aus Butanal mit Natronlauge als Base die Natrium-Ionen, in Richtung der Kathode und die Anionen, vorzugsweise organische Säurereste, aber auch $OH^-$-Ionen, durch die Anionenaustauschermembran in Richtung der Anode. An der Kathode in der Kathodenkammer reagieren die Natrium-Ionen mit den an der Elektrode gemäß der Formel

$$H_2O + 1e^- \rightarrow OH^- + \tfrac{1}{2}H_2$$

entstehenden Hydroxidionen zu Natronlauge. An der Anode reagieren die in die Anodenkammer gewanderten negativ geladenen Säurereste mit den an der Elektrode gemäß der Formel

$$H_2O \rightarrow 2H^+ + \tfrac{1}{2}O_2 + 2e^-$$

entstehenden $H^+$-Ionen zur Säure. Durch die vorgenannten Prozesse werden von der zu behandelnden organische Säuren enthaltenden Lösung in der Kathodenkammer die organischen Säuren abgetrennt und diese in der Anodenkammer angereichert. Das Verfahren eignet sich also vorzüglich zur Abtrennung von organischen Säuren aus wäßrigen Lösungen. Im Fall von basenkatalysierten Aldolisierungsprozessen enthält die zu behandelnde wäßrige Lösung in der Kathodenkammer neben organischen Säuren auch Basen. Diese Lösung kann in der Kathodenkammer durch das oben genannte Verfahren nicht nur an organischen Säuren abgereichert, sondern auch an Base angereichert werden und damit direkt im Prozeß wieder als Katalysator eingesetzt werden, ohne entsorgt werden zu müssen.

Stammt die zu behandelnde Lösung aus Aldolisierungsprozessen und enthält sie somit neben organischen Säuren auch den basischen Katalysator, wird bevorzugt zur Optimierung der Abtrennleistung das Verhältnis Säure zu Base in der zu behandelnden wäßrigen Lösung variiert. Durch Neutralisation der Base in der wäßrigen Lösung durch Erhöhung der Säurekonzentration, vorzugsweise der organischen Säuren, welche in der zu behandelnden Lösung schon vorhanden sind, steigt der Anteil an Säureanionen gegenüber den Hydroxidanionen. Dadurch kann die organische Säure mit höherer Selektivität, d.h. höherer Stromausbeute durch die Anionenaustauschermembran transportiert werden. Der elektrische Strom wird also hauptsächlich von den Säureanionen transportiert.

Ebenfalls zur Optimierung der Abtrennleistung und zur Verringerung des norwendigen Energieeintrags kann den in der Anodenkammer vorgelegten organischen Säuren eine starke mineralische Säure, wie z.B. Schwefelsäure, oder eine Base, vorzugsweise - sofern vorhanden - die in der zu behandelnden Lösung schon vorhandene Base, zugesetzt werden, um die Leitfähigkeit in dieser Kammer zu erhöhen. Dies ist empfehlenswert, da die Leitfähigkeit der Lösung in der Anodenkammer von der Ionen-konzentration abhängig ist. Diese ist beim Vorliegen der reinen Säurelösung nur sehr gering, da die Ionenkonzentration von den Dissoziationskonstanten der vorgeiegten organischen Säuren abhängig ist. Durch Zugabe von Base, weiche in Wasser dissoziiert vorliegt und damit die Ionenkonzentration der Lösung in der Anodenkammer erhöht, kann die Leitfähigkeit in der Anodenkammer der in der Kathodenkammer angepaßt werden und dadurch der Energieeintrag verringert werden.

Durch Einstellen einer erfindungsgemäß bei 100 bis 1 000 A/m$^2$ liegenden Stromdichte können zwei zusätzliche Behandlungseffekte erzielt werden.

Zum einen kann die Kolbe-Reaktion an der Anode ausgenutzt werden, um die organischen Säuren elektrochemisch gemäß der Formeln

$$R\text{-}COO^- \rightarrow R\bullet + 1e^- + CO_2 \text{ und } 2R\bullet \rightarrow R\text{-}R$$

(R steht für einen beliebigen organischen Rest) durch Abspaltung von $CO_2$ in wasserunlösliche Kohlenwasserstoffe aufzuspalten. Da die entstehenden Kohlenwasserstoffe in der Hauptsache wasserunlöslich sind, können diese z. B. in einem der Andodenkammer nachgeschaltetem Phasenabscheider von der Anodenflüssigkeit abgetrennt und der Entsorgung oder Weiterverarbeitung zugeführt werden. Durch die Wahl der angelegten Spannung besteht bei diesem Verfahren also die Möglichkeit, je nachdem, welche organischen Säuren im Aldolisierungsprozeß entstehen, zu entscheiden, ob in der Hauptsache die Säure oder ein Teil der Säure als gemäß oben angegebener Formel zugänglicher Kohlenwasserstoff weiterverarbeitet werden sollen.

Der zweite Effekt, den sich das erfindungsgemäße Verfahren je nach Ausführung zu Nutze machen kann, basiert wahrscheinlich auf einer induzierten Konvektionsströmung in den Membranen. Überraschenderweise werden aus der zu behandelnden wäßrigen Lösung bei der Elektrolyse sogar neutrale organische Verbindungen abgetrennt. Diese Verbindungen treten oftmals als Nebenprodukte bei Aldolisierungsreaktionen in der wäßrigen Phase neben Basen und organischen Säuren auf Aufgrund des Effekts wandern die neutralen organischen Verbindungen mit den Anionen durch die Anionenaustauschermembran aus der Kathodenkammer, welche die zu behandelnde wäßrige Lösung enthält, in die Anodenkammer, wo sie ebenfalls durch Phasentrennung abgeschieden werden können. Die so erhaltenen neutralen organischen Verbindungen können wieder einer Entsorgung oder Weiterverarbeitung zugeführt werden.

Die zweite Ausführungsart des erfindungsgemäßen Verfahrens ist die Elektrodialyse, die vorzugsweise eingesetzt wird, wenn größere Volumina an Lösungen behandelt werden sollen oder die Abtrennung von organischen Säuren aus wäßrigen Lösungen in kürzerer Zeit erfolgen soll. Zu diesem Zweck wird die Anzahl der Kammern im Elektrolysemodul in der Weise erhöht, daß zwischen die äußeren Kammern, welche die Elektroden, die denen in der elektrolytischen Ausführungsart des erfindungsgemäßen Verfahrens entsprechen, aufnehmen, alternierend Anionenaustauschermembranen und bipolare Membranen eingesetzt werden. Es können handelsübliche Membranen verwendet werden. Als Anionenaustauschermembran kann z. B. die Membran AHA-2 der Firma Tokuyama Soda Ltd. und als bipolare Membran z B die bipolare Membran der Firma Aqualytics eingesetzt werden.

Die Kathodenkammer und die die zu behandelnde Lösung aufnehmenden Kammern werden gemeinsam oder getrennt, vorzugsweise gemeinsam, vorzugsweise wieder in einen Vorlage-Kreislauf eingebunden, in dem die zu behandelnde Lösung vorgelegt wird. Die Kathodenkammer wird im Gegenstrom oder im Gleichstrom, vorzugsweise im Gleichstrom zum Strom der die Säure aufnehmenden Kammern, den Säurekammern, durchströmt. Die die Lösung enthaltenden Kammern werden ebenfalls im Gegenstrom oder im Gleichstrom, vorzugsweise im Gleichstrom, zum Strom in den die Säure führenden Kammern durchströmt. Die Anodenkammer und die weiteren die Säure aufnehmenden Kammern werden gemeinsam oder getrennt, vorzugsweise gemeinsam, vorzugsweise ebenfalls in einen Vorlage-Kreislauf eingebunden, in den Säure vorgelegt wird. Die Anodenkammer wird im Gegenstrom oder im Gleichstrom, vorzugsweise im Gleichstrom, zum Strom in den die zu behandelnde Lösung führenden Kammer durchströmt. Die Säurekammern werden ebenfalls im Gegenstrom oder im Gleichstrom, vorzugsweise im Gleichstrom, zum Strom in der die zu behandelnde Lösung führenden Kammern durchströmt. Wie bereits bei der Elektrolyse ist die Einbindung der Kammern in Kreisläufe nicht zwingend.

Durch Anlegen einer elektrischen Spannung entsteht ein elektrisches Feld zwischen den Elektroden. Erfindungsgemäß wandern unter Einfluß des Feldes die Kationen. im Fall z. B. der basenkatalysierten Octenalherstellung aus Butanal mit Natronlauge als Base die Natrium-Ionen, in Richtung der Kathode zur Kathode bzw. zu einer bipolaren Membran und die Anionen, vorzugsweise organische Säurereste, aber auch OH$^-$-

Ionen, durch die Anionenaustauschermembran in Richtung der Anode bzw. in Richtung einer bipolaren Membran. An der Kathode in der Kathodenkammer und an den bipolaren Membranen im Lösungskreis bilden die Natrium-Ionen mit den an der Elektrode gemäß der Formel

$$H_2O + 1e^- \rightarrow OH^- + \tfrac{1}{2}H_2$$

bzw. den an den bipolaren Membranen durch Aufspaltung von Wasser in $OH^-$ und $H^+$- Ionen entstehenden Hydroxidionen Natronlauge. An der Anode bzw. den bipolaren Membranen bilden die in die Anodenkammer bzw. die Säurekammern gewanderten negativ geladenen Säurereste mit den an der Elektrode gemäß der Formel

$$H_2O \rightarrow 2H^+ + \tfrac{1}{2}O_2 + 2e^-$$

bzw. den an den bipolaren Membranen durch Aufspaltung von Wasser in $OH^-$ und $H^+$- Ionen entstehenden $H^+$-Ionen Säure. Durch die vorgenannten Prozesse werden von der organische Säuren enthaltenden Lösung die organischen Säuren abgetrennt und diese in der Anodenkammer und den Säurekammern angereichert. Das Verfahren eignet sich also vorzüglich zur Behandlung von größeren Volumina von organische Säuren enthaltenden, wäßrigen Lösungen. Im Fall von basenkatalysietten Aldolisierungsprozessen enthält die zu behandelnde wäßrige Lösung in der Kathodenkammer bzw. in den die zu behandelnde Lösung führenden Kammern neben organischen Säuren auch Basen. Diese Lösung kann in der Kathodenkammer bzw. in den die zu behandelnde Lösung führenden Kammern durch das oben genannte Verfahren an organischen Säuren abgereichert und an Base angereichert werden und damit direkt im Prozeß wieder als Katalysator eingesetzt werden.

Stammt die zu behandelnde Lösung aus Aldolisierungsprozessen und enthält sie somit neben organischen Säuren auch den basischen Katalysator, wird bevorzugt zur Optimierung der Abtrennleistung das Verhältnis Säure zu Base in der zu behandelnden wäßrigen Lösung variiert. Durch Neutralisation der Base in der wäßrigen Lösung durch Erhöhung der Säurekonzentration, vorzugsweise der organischen Säuren, welche in der zu behandelnden Lösung schon vorhanden sind, steigt der Anteil an Säureanionen gegenüber den Hydroxidanionen. Dadurch kann die organische Säure mit höherer Selektivität, d.h. höherer Stromausbeute durch die Anionenaustauschermembran transportiert werden. Der elektrische Strom wird also hauptsächlich von den Säureanionen transportiert.

Ebenfalls zur Optimierung der Abtrennleistung und zur Verringerung des notwendigen Energieeintrags kann der vorgelegten Säure eine Base, vorzugsweise - falls vorhanden - die in der zu behandelnden Lösung schon vorhandene Base, zugesetzt werden, um die Leitfähigkeit in den Kammern, in denen Säure vorgelegt wird, zu erhöhen. Dies ist empfehlenswert, da die Leitfähigkeit der Lösung in der Anodenkammer bzw. in den Säurekammern von der Ionenkonzentration abhängig ist. Diese ist beim Vorliegen der reinen Säurelösung nur sehr gering, da die Ionenkonzentration von der Dissoziationskonstanten der vorgelegten organischen Säure abhängig ist. Durch Zugabe der Base, welche in Wasser dissoziiert vorliegt und damit die Ionenkonzentration der Lösung in der Anodenkammer erhöht, kann die Leitfähigkeit in der Anodenkammer bzw. den Säurekammern der in der Kathodenkammer bzw. in den die zu behandelnde Lösung enthaltenden Kammern angepaßt werden und dadurch der Energieeintrag verringert werden

Durch Einstellen einer erfindungsgemäß bei 100 bis 1 000 $A/m^2$ liegenden Stromdichte können zwei zusätzliche Behandlungseffekte erzielt werden.

Zum einen kann die Kolbe-Reaktion an der Anode ausgenutzt werden, um die organischen Säuren elektrochemisch gemäß der Formeln

$$R\text{-}COO^- \rightarrow R\cdot + 1e^- + CO_2 \text{ und } 2R\cdot \rightarrow R\text{-}R$$

(R steht für einen beliebigen organischen Rest) durch Abspaltung von $CO_2$, in wasserunlösliche Kohlenwasserstoffe aufzuspalten. Da die entstehenden Kohlenwasserstoffe in der Hauptsache wasserunlöslich sind, können diese z. B. in einem der Anodenkammer nachgeschaltetem Phasenabscheider von der Anodenflüssigkeit abgetrennt und der Entsorgung oder Weiterverarbeitung zugeführt werden. Durch die Wahl der angelegten Spannung besteht bei diesem Verfahren also die Möglichkeit, je nachdem welche organischen Säuren im Aldolisierungsprozeß entstehen, zu entscheiden, ob die Säure oder ein Teil der Säure als gemaß oben angegebener Formel zugänglicher Kohlenwasserstoff weiterverarbeitet werden sollen. Da die Kolbe-Reaktion nur direkt an der Anode stattfindet, kann bei der elektrodialytischen Ausführungsart des erfindungsgemäßen Verfahrens nur ein kleiner Teil der Säure in einen Kohlenwasserstoff umgewandelt werden.

Der zweite Effekt, den sich das erfindungsgemäße Verfahren je nach Ausführung zu Nutze machen kann, basiert wahrscheinlich auf einer induzierten Konvektionsströmung in den Membranen. Überraschenderweise werden aus der zu behandelnden wäßrigen Lösung bei der Elektrolyse sogar neutrale organische Verbindungen abgetrennt. Diese Verbindungen treten oftmals als Nebenprodukte bei Aldolisierungsreaktionen in der wäßrigen Phase neben Basen und organischen Säuren auf Aufgrund des Effekts wandern die neutralen organischen Verbindungen mit den Anionen durch die Anionenaustauschermembran aus der Kammer, welche die zu behandelnde wäßrige Lösung enthält, in die Anoden- bzw. Säurekammern. Aus dem Anodenkreislauf bzw. den Säurekreisläufen können die neutralen organischen Verbindungen ebenfalls durch Phasentrennung abgeschieden werden. Die so erhaltenen neutralen organischen Verbindungen werden wieder der Entsorgung oder Weiterverarbeitung zugeführt.

Vorzugsweise wird die erfindungsgemäß behandelte wäßrige Lösung einer Kläranlage oder einer weiteren Verarbeitung zugeführt. Die aus der zu behandelnden wäßrigen Lösung abgetrennten organischen Bestandteile im Säurekreislauf werden aufkonzentriert und entweder direkt der thermischen Entsorgung zugeführt oder weiterverarbeitet, z. B. mittels eines Phasenabscheiders in wasserlösliche und wasserunlösliche Verbindungen getrennt und einzeln entsorgt oder weiterverarbeitet.

Die erfindungsgernäßen Verfahren werden vorzugsweise bei Umgebungsdruck und bevorzugt bei Temperaturen zwischen 20 °C und 90 °C, besonders bevorzugt bei 30 °C bis 60 °C, durchgeführt.

Die erfindungsgemäßen Verfahren können kontinuierlich oder diskontinuierlich auf elektrolytischem oder elektrodialytischem Weg ausgeführt werden. Die Stärke des angelegten elektrischen Feldes ist unter anderem von den apparativen Bedingungen und den in der zu behandelnden Lösung vorliegenden Stoffpaarungen abhängig und ist so zu bemessen, daß die erfindungsgemäßen Effekte erzielt werden. Vorzugsweise wird eine Stromdichte von 50 bis 1 000 A/m$^2$ eingestellt.

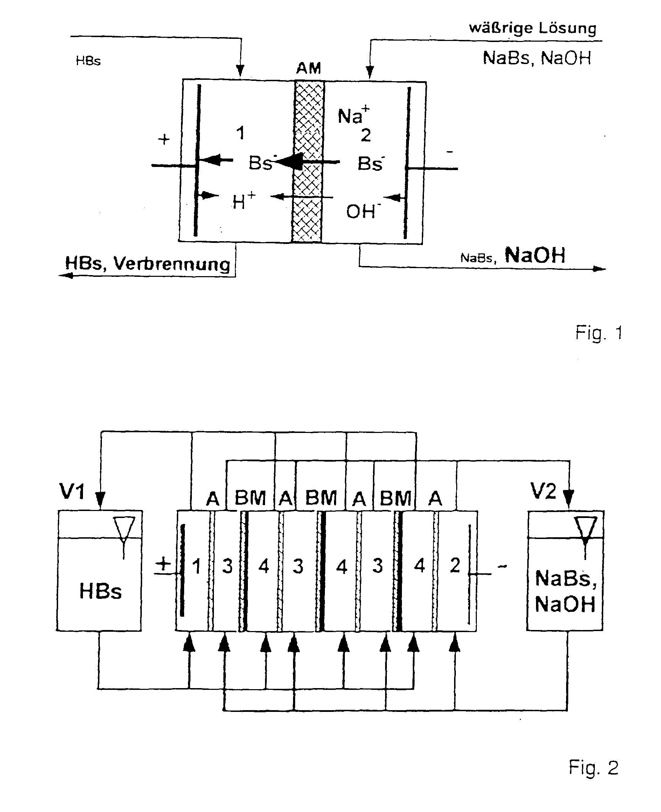

In den Figuren 1 und 2 sind beispielhaft zwei Ausführungsarten des erfindungsgemäßen Verfahrens dargestellt, ohne daß das Verfahren auf diese beschränkt ist.

Figur 1 stellt eine elektrolytische Ausführungsart des erfindungsgernäßen Verfahrens dar. Das Elektrolysemodul wird durch eine Anionenaustauschermembran A in die zwei Kammern 1 und 2 aufgeteilt. Die Anodenkammer 1, in welcher die mit + gekennzeichnete Anode angeordnet ist, wird hier z. B. mit einer Buttersäure HBs enthaltenden Lösung beschickt. Die Kathodenkammer 2, in welcher die mit - gekennzeichnete Kathode angeordnet ist, wird von der zu behandelnden wäßrigen Lösung, in diesem Beispiel von einem Abwasserstrom, der NaOH und das Natriumsalz von Buttersäure NaBs enthält, durchströmt. Im elektrischen Feld wandern die Na$^+$-Ionen zur Kathode und bilden dort mit den gebildeten OH$^-$-Ionen Natronlauge. Die an der Anode (+) entstehenden H$^+$-Ionen reagieren mit den durch die Anionenaustauschermembran A gewanderten Anionen OH$^-$ und Bs$^-$ zu Buttersäure und Wasser.

Eine elektrodialytische Ausführungsart des erfindungsgemäßen Verfahrens ist in Figur 2 dargestellt. Das Elektrolysemodul wird durch vier Anionenaustauschermembranen A und drei bipolare Membranen BM in eine Kathodenkammer 2. eine Anodenkammer 1, drei die zu behandelnde Lösung führende Kammern 3 und drei Säurekammern 4 aufgeteilt.

Die Anodenkammer 1, in welcher die mit + gekennzeichnete Anode angeordnet ist, wird in diesem Beispiel im Kreis von einer Bunersäure HBs enthaltenden Lösung, welche aus der Vorlage V1 vorgelegt wird, im Gleichstrom durchströmt. Die Säurekammern 4 werden ebenfalls mit der in der Vorlage V1 vorgelegten Lösung im Gleichstrom beschickt. Die Lösungen der Anodenkammer und der Säurekammern vereinigen sich nach dem Durchströmen des Elektrolysemoduls und werden in einer Vorlage V1 gesammelt. Aus dieser Vorlage wird die Lösung den Kammern zugeführt, wobei die Lösung auf die Kammern 1 und 4 aufgeteilt wird. Die Kathodenkammer 2, in welcher die mit - gekennzeichnete Kathode angeordnet ist, wird im Kreis von der in diesem Fall NaOH und NaBs enthaltenden zu behandelnden Lösung, welche aus der Vorlage V2 vorgelegt wird, im Gleichstrom beschickt. Die die zu behandelnde Lösung enthaltenden Kammern 3 werden ebenfalls mit der in der Vorlage V2 vorgelegten Lösung im Gleichstrom beschickt. Die Lösungen der Kathodenkammer 2 und der die zu behandelnden Lösungen führenden Kammern 3 vereinigen sich nach Durchfließen des Elektrodialysemoduls und werden in der Vorlage V2 gesammelt. Im elektrischen Feld wandern die Na$^+$-Ionen in den Kammern 2 und 3 zur Kathode bzw. zu den bipolaren Membranen BM und bilden dort mit den an der Kathode (-) bzw. den bipolaren Membranen BM gebildeten OH$^-$-Ionen Natronlauge. Die an der Anode (+) bzw. an den bipolaren Membranen BM entstehenden H$^+$-Ionen reagieren mit den durch die Anionenaustauschermembran A aus den Kammern 2 bzw. 3 in die Kammer 1 bzw. die Kammern 4 gewanderten Anionen OH$^-$ und Bs$^-$ zu organischer Säure und Wasser.

Das erfindungsgemäße Verfahren wird durch die folgenden Beispiele näher erläutert, ohne darauf beschränkt zu sein. In den Beispielen wird das Verfahren anhand der Elektrolyse veranschaulicht, da diese auch die Grundlage der Ausführung als Elektrodialyse und weiterer Varianten darstellt.

## Beispiele

Beispiel 1: Reinigung des Reaktionswassers aus einer Methylbutanal-Aldolisierung

In einem Zweikammerelektrolysemodul, deren Kammern durch eine Anionenaustauschermembran aus AHA-2 der Firma Tokuyama Soda Ltd. getrennt sind, wurde mit einer Mode aus Titan mit Mischoxid mit einer Oberfläche von 100 cm$^2$, sowie einer Kathode aus Edelstahl Streckmetall mit einer Oberfläche von 100 cm$^2$ bei einer Stromdichte von 350 A/m$^2$ eine Elektrolyse durchgeführt. Der Abstand der Elektroden zur Membran betrug 2,5 mm und die Membranfläche betrug 100 cm$^2$. In dem Anodenkreislauf wurde eine vorkonzentrierte Methylbuttersäurelösung, der zur Steigerung der Leitfähigkeit 1 Gew.-% Natronlauge zugefligt wurde, vorgelegt, im Kathodenkreislauf wurde das Reaktionswasser aus einer Methylbutanal-Aldolisierung, das Natronlauge und Methylbuttersäure enthält, vorgelegt. Die Leitfähigkeiten der Lösungen in allen Kammern wurden während des gesamten Elektrodialysevorgangs permanent mit Hilfe einer Meßvorrichtung der Firma WTW bestimmt.

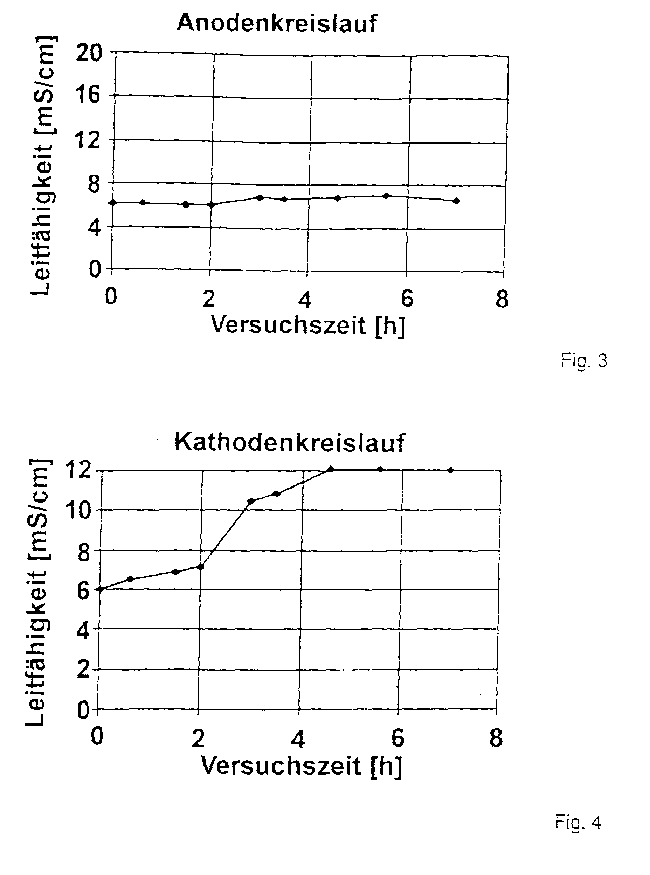

Im Laufe der Elektrolyse stieg die Leitfähigkeit im Reaktionswasserkreislauf bis auf einen maximalen Wert von 13 mS/cm an. Im Anodenkreislauf blieb die Leitfahigkeit nahezu konstant. Die Figur 3 stellt den zeitlichen Verlauf der Leitfähigkeit in der Anodenkammer, Figur 4 den zeitlichen Verlauf der Leitfähigkeit in der Kathodenkammer dar.

Beispiel 2: Reinigung des Reaktionswassers aus einer Octenalherstellung

In einem wie in Beispiel 1 angegebenen Zweikammerelektrolysemodul gleicher Ausstattung wurden drei weitere Elektrolysen durchgeführt. Anstatt der Methylbuttersäure enthielt das verwendete Reaktionswasser, welches bei der Octenalherstellung anfällt, Buttersäure. Bei diesen Versuchen wurde zusätzlich das Verhältnis der Ausgangsbuttersäurekonzentration zur Hydroxidkonzentration variiert. Zu diesem Zweck wurde bei der zweiten und dritten Elektrolyse die Konzentration der Buttersäure im Reaktionswasser durch Zugabe von Buttersäure um 0,3 bzw. 0,6 moll erhöht. Die Leitfähigkeiten der Lösungen in allen Kammern wurden während des gesamten Elektrodialysevorgangs permanent mit Hilfe einer Meßvorrichtung der Firma WTW bestimmt.

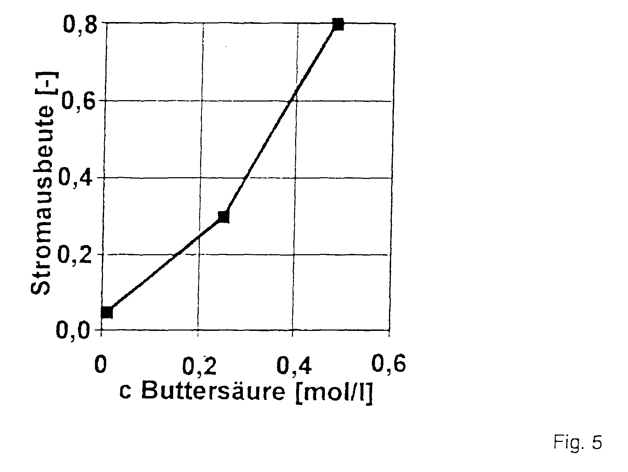

Bei größeren Buttersäurekonzentrationen nimmt die Leitfähigkeit ab, da die im Reaktionswasser enthaltene Natronlauge von der Buttersäure neutralisiert wird. Durch Neutralisation der Base in der wäßrigen Lösung durch Erhöhung der Säurekonzentration, vorzugsweise der organischen Säuren, welche in der zu behandelnden Lösung schon vorhanden sind, steigt der Anteil an Säureanionen gegenüber den Hydroxidanionen. Dadurch kann die organische Säure mit höherer Selektivita d.h. höherer Stromausbeute durch die Anionenaustauschermembran transportiert werden. Der elektrische Strom wird also hauptsächlich von den Säureanionen transportiert. Daraus folgend steigt die Stromausbeure bei größerer Buttersäurezugabe in den Reaktionswasserkreislauf an. In Figur 5 ist die Stromausbeute gegen die Buttersäurekonzentration aufgetragen.

**Patentansprüche**

1. Verfahren zur Abtrennung von organischen Säuren aus wäßrigen Lösungen,
   dadurch gekennzeichnet,

   daß die Abtrennung durch ein elektrochemisches Verfahren erfolgt.

2. Verfahren nach Anspruch 1, gekennzeichnet durch die Abtrennung organischer Säuren mittels Elektrolyse.

3. Verfahren nach Anspruch 1, gekennzeichnet durch die Abtrennung organischer Säuren mittels Elektrodialyse.

4. Verfahren nach Anspruch 2,
   dadurch gekennzeichnet,

   daß die zu behandelnde Lösung in die Kathodenkammer 2 eingebracht Wird, wobei die Kathodenkammer 2 von der Anodenkammer 1 durch zumindest eine Anionenaustauschermembran A getrennt ist.

5. Verfahren nach Anspruch 3,
   dadurch gekennzeichnet,

   daß bei der Elektrodialyse die Säurekammern 4 von den daneben angeordneten Kammern 3 bzw. 2, welche die zu behandelnde wäßrige Lösung enthalten auf der der Kathode zugewandten Seite durch mindestens eine Anionenaustauschermembran A und auf der der Anode zugewandten Seite durch mindestens eine bipolare Membran BM getrennt sind.

6. Verfahren nach zumindest einem der vorherigen Ansprüche,
   dadurch gekennzeichnet,

   daß der zur Aufnahme von Anionen vorgelegten Säure in den Kammern 1 oder 4 oder 1 und 4 Base zugesetzt wird.

7. Verfahren nach zumindest einem der vorherigen Ansprüche,
   dadurch gekennzeichnet, daß neutrale organische Verbindungen abgetrennt werden.

8. Verfahren nach zumindest einem der vorherigen Ansprüche,
   dadurch gekennzeichnet,

   daß zumindest eine Elektrode aus Stahl, Platinmohr, Graphit, Mischoxid. reinem Platin oder aus einer Kombination dieser Bestandteile in reiner Form oder aufgetragen auf oder eingebracht in ein Trägermaterial verwendet wird.

9. Verfahren nach zumindest einem der vorherigen Ansprüche,
   dadurch gekennzeichnet,

   daß das Trennverfahren bei 20 bis 140 °C durchgeführt wird.

**10.** Verfahren nach Anspruch 9,
dadurch gekennzeichnet,

daß das Trennverfahren bei 30 bis 60 °C durchgeführt wird.

**11.** Verfahren nach zumindest einem der vorherigen
Ansprüche,
dadurch gekennzeichnet,

daß das Verfahren kontinuierlich ausgeführt
wird.

**12.** Verfahren nach zumindest einem der Ansprüche 1
bis 10,
dadurch gekennzeichnet,

daß das Verfahren diskontinuierlich ausgeführt
wird.

**13.** Verfahren nach zumindest einem der vorherigen
Ansprüche,
dadurch gekennzeichnet,

daß organische Verbindungen an der Anode
elektrochemisch gespalten werden.

**14.** Verfahren nach zumindest einem der vorherigen
Ansprüche,
dadurch gekennzeichnet,

daß die zu behandelnde Lösung Base enthält
und dieser wäßrigen Lösung organische Säure
zugesetzt wird.

**15.** Verfahren nach Anspruch 14,
dadurch gekennzeichnet,

daß vorzugsweise eine Säure die in der zu
behandelnden Lösung schon vorliegt, zugesetzt wird.

**16.** Verfahren nach zumindest einem der vorherigen
Ansprüche 1 bis 15 zur Abtrennung organischer
Säuren aus dem Prozeßwasser. das bei Aldolisierungsreaktionen anfällt.

Fig. 1

Fig. 2

## Anodenkreislauf

Fig. 3

## Kathodenkreislauf

Fig. 4

Fig. 5